Europäisches Patentamt

(19) European Patent Office

Office européen des brevets

(11) Numéro de publication : **0 250 493 B1**

(12) # FASCICULE DE BREVET EUROPEEN

(45) Date de publication du fascicule du brevet :
03.04.91 Bulletin 91/14

(51) Int. Cl.⁵ : **C12G 3/08**

(21) Numéro de dépôt : **87900039.6**

(22) Date de dépôt : **18.12.86**

(86) Numéro de dépôt international :
**PCT/CH86/00178**

(87) Numéro de publication internationale :
**WO 87/03902 02.07.87 Gazette 87/14**

(54) **PROCEDE DE DESALCOOLISATION PARTIELLE OU TOTALE DU VIN ET/OU DU CIDRE ET DISPOSITIF POUR LA MISE EN O EUVRE DE CE PROCEDE.**

(30) Priorité : **19.12.85 FR 8519097**

(43) Date de publication de la demande :
**07.01.88 Bulletin 88/01**

(45) Mention de la délivrance du brevet :
**03.04.91 Bulletin 91/14**

(84) Etats contractants désignés :
**AT BE CH DE FR GB IT LI LU NL SE**

(56) Documents cités :
**EP-A- 0 162 240
BE-A- 717 847
DE-A- 2 323 094
DE-A- 2 339 206
DE-A- 3 344 628**

(73) Titulaire : **FEDERATION DES COOPERATIVES MIGROS
Limmatstrasse 152
CH-8031 Zürich (CH)**

(72) Inventeur : **GIRARD, Jean-Marc
Maladaire 6
CH-1530 Payerne (CH)**
Inventeur : **CUENAT, Philippe
Ch. Bonmont 19
CH-1260 Nyon (CH)**

(74) Mandataire : **Nithardt, Roland
CABINET ROLAND NITHARDT Attn: Cabinet
MOSER & CIE Rue Edouard Verdan 15
CH-1400 Yverdon-les-Bains (CH)**

Jouve, 18, rue Saint-Denis, 75001 PARIS

## Description

La présente invention concerne un procédé de désalcoolisation partielle ou totale du vin et/ou du cidre par utilisation de la technique dite de l'osmose inverse.

Elle concerne également un dispositif pour la mise en oeuvre de ce procédé.

Divers procédés ont été utilisés pour tenter d'éliminer l'alcool de diverses boissons alcooliques telles que le vin, la bière, le cidre etc... Parmi ces procédés, le plus ancien est l'évaporation qui aboutit à un produit ayant subi un traitement thermique, dégradé, au goût de «cuit» et dont les arômes se sont modifiés pendant l'opération. En outre, ces procédés nécessitent un apport énergétique important, de sorte que le coût du produit final obtenu est fortement influencé par le coût d'exploitation énergétique des installations.

L'osmose inverse pour désalcooliser partiellement les vins, consistant à faire passer le vin brut à travers des membranes pour séparer de ce vin un perméat constitué d'un mélange d'eau et d'alcool, et à remplacer le volume exact de ce perméat par un volume équivalent d'eau déminéralisée ou non, a déjà fait l'objet de nombreux essais décrits dans plusieurs publications analysées ci-dessous.

La demande de brevet européen publiée sous le No EP-A-0162240 décrit un procédé et une installation pour désalcooliser des boissons alcooliques par osmose inverse. Le perméat retiré du module d'osmose est distillé sous vide pour être désalcoolisé, puis est rajouté au rétentat afin de lui restituer des arômes provenant de la boisson originale et de réduire l'apport d'eau. Le cas échéant, pour éviter totalement un apport d'eau, l'alcool extrait peut être remplacé par du vin distillé sous vide, ajouté au perméat à la sortie du module d'osmose.

La technique de distillation sous vide utilisée pour isoler les arômes du perméat provoquent une dégradation de ces arômes, de sorte que les substances résiduelles rajoutées au rétentat, ne permettent en aucun cas de restituer à ce dernier le goût de la boisson originale.

La demande de brevet allemand DE-A 23 39 206 décrit un autre procédé de désalcoolisation du vin ou d'autres boissons alcoolisées par une technique utilisant le principe de l'osmose inverse. Le mélange d'eau et d'alcool extrait est remplacé par de l'eau et, le procédé prévoit l'addition, postérieure au traitement, de jus de fruits légèrement fermentés pour rétablir un semblant de goût initial.

La demande de brevet allemand DE-A- 23 23 094 décrit également un procédé de désalcoolisation de la bière par osmose inverse. Selon un principe analogue à celui décrit dans la demande de brevet européen mentionnée ci-dessus, on extrait l'alcool du perméat et l'on rajoute ce perméat soit au rétentat, soit à la boisson originale avant son introduction dans le module d'osmose.

L'analyse de ces différentes publications démontre de façon claire que l'un des soucis fondamentaux de tous ceux qui ont tenté de désalcooliser des boissons alcooliques en appliquant un procédé basé sur l'osmose inverse ont été confrontés au problème de la dégradation du goût et de l'arôme de la boisson obtenue après traitement. Cependant, aucune des approches qui ont été faites pour essayer de solutionner ce problème n'a abouti à un résultat acceptable. Le recours à des traitements thermiques pour chasser l'alcool du perméat engendre immanquablement une dégradation du goût et des arômes. L'addition d'une quantité contrôlée de liquide original ne peut en aucun cas rétablir le goût et l'arôme originaux étant donné que les substances réintroduites sont trop fortement diluées pour transmettre leurs caractéristiques à l'ensemble du volume traité, surtout si l'on veut conserver un taux d'alcool inférieur à 0,7° dans le produit fini.

En conséquence, les boissons désalcoolisées et plus particulièrement les vins désalcoolisés obtenus par les procédés connus à ce jour, ne possèdent plus les qualités de goût et d'arôme qui en font un produit apprécié par le consommateur.

La présente invention a pour but de pallier cet inconvénient en proposant un procédé de désalcoolisation partielle ou totale du vin et/ou du cidre permettant d'aboutir à un produit dont le goût et le bouquet sont mieux préservés.

Dans ce but, le procédé selon l'invention est caractérisé en ce que l'on effectue le stockage et le traitement de ce liquide à désalcooliser, dans une atmosphère non oxydante, en ce que l'on fait passer ce liquide dans un module d'osmose inverse, en ce que l'on compense en permanence la perte de volume due à la séparation du perméat par un apport d'eau déminéralisée totalement débarrassée de toute trace de chlore, en ce que l'on rajoute au rétentat des ingrédients naturels ou synthétiques non extraits du liquide original par traitement thermique, et en ce que l'on fait subir au rétentat ainsi complété un collage et une filtration suivis d'une pasteurisation.

Selon un mode de réalisation particulièrement avantageux du procédé, l'on maintient les ingrédients dans des cuves closes, sous une atmosphère non oxydante.

Pour rajouter les ingrédients naturels ou synthétiques au rétentat, on dissout de préférence une quantité prédéterminée desdits ingrédients dans un volume prédéterminé de rétentat prélevé dans le circuit de désalcoolisation et on réinjecte ce mélange dans ce circuit.

L'on réinjecte avantageusement les ingrédients dissous dans du rétentat après avoir abaissé la pression dans le module d'osmose inverse à une valeur inférieure à la pression minimale du déclenchement du processus d'osmose inverse.

Les ingrédients utilisés sont de préférence choisis parmi les concentrés de jus de fruits, les acides alimentaires, les sucres, les tartrates et/ou le tanin.

L'on efffectue la réinjection des ingrédients dissous dans du rétentat dans le circuit de désalcoolisation, de préférence en présence d'anhydride sulfureux (SO2).

Selon un mode de réalisation avantageux, notamment pour l'obtention de vins blancs ou vins mousseux désalcoolisés, l'on introduit dans le liquide désalcoolisé, après collage, une quantité prédéterminée d'anhydride carbonique (CO2).

Le dispositif pour la mise en oeuvre du procédé de désalcoolisation partielle ou totale du vin et/ou du cidre par utilisation de la technique dite de l'osmose inverse est caractérisé en ce qu'il comporte un premier réservoir conçu pour contenir le liquide à traiter, des moyens pour créer une atmosphère non oxydante dans ledit réservoir et dans un circuit fermé de désalcoolisation, un module d'osmose inverse monté dans ce circuit, de telle manière que le liquide circule en continu entre le réservoir et le module, des moyens pour compenser en permanence la perte de volume due à la séparation du perméat, par un apport d'eau déminéralisée, des moyens pour débarrasser cette eau de toute trace de chlore, des moyens pour mélanger des ingrédients naturels ou synthétiques, non extraits du liquide original, des moyens pour ajouter ces ingrédients dans le rétentat, et des moyens pour coller, filtrer ainsi que des moyens pour pasteuriser ledit rétentat.

La présente invention sera mieux comprise en référence à la description d'un exemple de réalisation du dispositif utilisé pour la mise en oeuvre du procédé décrit et du dessin annexé dans lequel :

La figure 1 représente une vue schématique d'une installation permettant de mettre en oeuvre de façon industrielle le procédé selon l'invention, et

La figure 2 représente la courbe de désalcoolisation d'un liquide à traiter en fonction du temps de traitement.

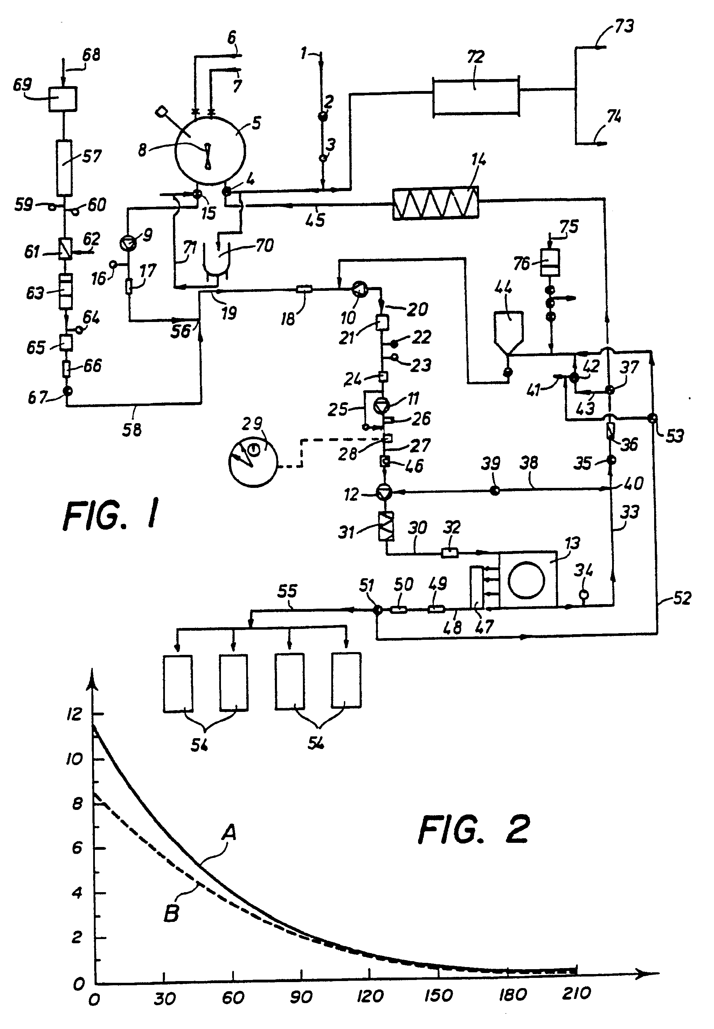

Le procédé selon l'invention tel qu'il est exploité de façon industrielle dans l'installation représentée schématiquement par la figure 1 sera décrit en détail ci-dessous.

On notera tout d'abord que le vin à traiter doit répondre à des exigences très précises de qualité. D'une part, il doit être irréprochable du point de vue bactériologique. On peut accepter au maximum deux cents germes totaux par 100 ml de liquide à traiter et un maximum de vingt levures par litre de liquide. Le vin doit être stabilisé au froid et collé de façon traditionnelle. Une filtration claire doit être effectuée au préalable, de préférence au moyen de filtres à plaques du type K10 ou Stéril de Filtrox ®. Pour le transport, il est sulfité au moyen de SO2 à raison d'un maximum de 35 mg libre par litre et de préférence à raison de 20 mg par litre. Pour les vins rouges, il est préférable d'éviter des teneurs en tanin supérieures à 1,5 g par litre ou d'éviter l'utilisation des assemblages où le cépage Pinot domine.

La livraison du vin s'effectue en citernes à une température ne descendant pas en dessous de 4°C à cause du tartre, ni au-dessus de 15°C à cause des problèmes bactériologiques.

La mise en route de la désalcoolisation s'effectue de la façon suivante : le vin réceptionné en 1 est pompé au moyen d'une pompe 2, via un compteur 3 et une vanne à trois voies 4 dans une cuve de traitement 5, disposée dans un local dont la température est maintenue naturellement ou artificiellement entre 4 et 10°C. Cette cuve peut être connectée alternativement à deux sources 6 et 7 de gaz non oxydants qui sont de préférence l'azote (N2, utilisé pour les vins rougis) et l'anhydride carbonique (CO2 utilisée pour les vins blancs). Préalablement à l'introduction du vin dans la cuve 5, on sature cette dernière au moyen de l'un ou de l'autre des gaz non oxydants, pour créer une atmosphère non oxydante, sous une pression déterminée, dans la cuve et dans toute l'enceinte de traitement. La cuve comporte par ailleurs un organe de brassage 8, du type lent disposé au fond de la cuve pour assurer un brassage régulier de tous les constituants du vin désalcoolisé pendant et après le traitement.

Lorsque tout le vin à traiter est pompé dans la cuve de traitement 5, on ferme la vanne à trois voies 4 de manière à procéder à la purge des conduites de l'installation. Cette installation comporte, outre la cuve 5, des pompes 9, 10, 11, 12, dont le rôle sera expliqué par la suite, un module d'osmose inverse 13, et un échangeur à plaques 14, par exemple un échangeur Unipectine R. Pour purger les conduites, on déclenche les pompes 11 et 12, la pompe 11 étant une pompe à haute pression, et l'on enclenche les pompes 9 et 10. Par ailleurs, on actionne une vanne à trois voies 15, raccordée à la cuve 5, pour ouvrir le conduit reliant la cuve à la pompe 9. Un manomètre 16 permet de contrôler la pression à la sortie de la pompe 9 et un débimètre 17 permet d'en contrôler le débit. Une sonde alarme 18, disposée sur le conduit 19 reliant la pompe 9 à la pompe 10 permet de signaler l'absence de produit et de déclencher un signal d'alarme pour informer l'opérateur de cette situation ou arrêter automatiquement l'installation.

Le tronçon de circuit 20 disposé entre la pompe 10 et la pompe 11 comporte un filtre 21 pour collecter les saletés accumulées dans le circuit, un manomètre de contrôle 22 adapté à des pressions comprises entre 0 et 4 bars, un indicateur de température 23 et un thermostat 24 susceptible de déclencher un signal d'alarme pour des températures dépassant un seuil, par exemple fixé à 45°C. Un circuit de dérivation 25 permet de contourner la pompe à haute pression 11 à laquelle est associé un amortisseur de pulsations 26. Sur le conduit 27, disposé entre la pompe à haute pression 11 et la pompe 12, est montée une sonde de régulation de pression 28 associée à un système de régulation de la pression 29, connu en soi.

Le tronçon de circuit 30, disposé entre la pompe 12 et le module d'osmose inverse 13, comporte un refroidisseur 31 constitué par un échangeur de chaleur et un dispositif de sécurité 32 destiné à contrôler les pressions à l'entrée du module 13.

Le circuit de retour 33, sur lequel est monté l'échangeur à plaques 14, comporte essentiellement un manomètre 34, disposé à la sortie du module 13, une vanne électromagnétique 35 de régulation de la pression dans le module 13, un rotamètre 36 permettant d'effectuer un contrôle optique du rétentat circulant dans le circuit de retour 33, et une vanne manuelle 37 dont le rôle sera expliqué par la suite. Une dérivation 38 sur laquelle est montée une vanne manuelle 39 est connectée entre la pompe 12 et un point 40 du circuit de retour pour assurer une alimentation suffisante de la pompe 37 en liquide. La vanne 39 est utilisée au cours des opérations de purge du circuit.

Pour effectuer cette purge, les pompes 11 et 12 sont arrêtées, la vanne 39 est fermée et le vin provenant de la cuve 5 est chassé par les pompes 9 et 10 à travers le circuit de dérivation 25 dans le module d'osmose 13, puis à travers l'échangeur à plaques 14 en direction de la vanne 4. L'eau de rinçage qui se trouvait dans les conduites est évacuée vers l'égout en 4. La vanne 39 ne sera rouverte qu'à la fin de la purge.

La purge et la mise en route sont terminées lorsque le vin pur, non mélangé à de l'eau de rinçage, apparaît dans le voyant de la vanne 4. A ce moment le circuit de désalcoolisation est purgé de son eau.

On enclenche alors les deux pompes 11 et 12 et l'on ferme le circuit de dérivation 25, de manière à forcer le vin à passer dans la pompe 11 où il est mis sous une pression située entre 35 et 40 bars nécessaire à la mise en oeuvre du procédé de désalcoolisation par osmose inverse. Cette pression, indiquée comme une valeur de consigne, est régulée au moyen de la sonde 28 et maintenue constante par le système de régulation 29. Diverses sécurités telles que la sonde alarme 18 signalant l'éventuelle absence de produit, la sécurité de pression 32, des rotamètres électroniques ou des sondes thermiques telles que la sonde 46 permettent d'assurer un fonctionnement automatique de l'installation.

En cours de désalcoolisation, on peut régler la pression d'azote ou d'anhydride carbonique dans le circuit et dans la cuve au moyen de deux pressostats (non représentés), de manière à maintenir constante la quantité de gaz dissoute dans le vin à traiter.

L'échangeur à plaques 14 qui constitue un refroidisseur est alimenté avec de l'eau froide à 5-10°C. Une température inférieure à 5°C risquerait d'entraîner une congélation du rétentat lorsque le taux résiduel de l'alcool devient faible.

Le module d'osmose inverse 13 utilisé a environ 19 m2 de surface membranaire et est chargé de préférence de membranes d'acétate de cellulose ou de membranes synthétiques, ces dernières ayant l'avantage de pouvoir être traitées par des produits chimiques plus agressifs tels que par exemple de l'acide nitrique (HNO3) dans le cas d'apparition de faux goûts dans le vin.

Le vin à désalcooliser circule à travers le circuit de désalcoolisation décrit ci-dessus en continu entre la cuve 5 et le module 13 jusqu'au moment où on atteint le degré d'alcool voulu dans le rétentat. Le perméat, constitué d'un mélange d'alcool et d'eau, séparé par le module d'osmose inverse 13, est évacué à travers un tube collecteur 47, vers un conduit 48 sur lequel sont montés un rotamètre électronique 49, une soupape de retenue 50 et une vanne à trois voies 51. Ce perméat peut être évacué directement vers l'égoût 41 via un conduit 52 et une vanne à trois voies 53. Il peut également être dérivé sur des réservoirs 54 à travers les conduits 55 raccordés à la vanne à trois voies 51. Les cuves 54 sont destinées à collecter le perméat selon son degré alcoolique, par exemple en vue d'une utilisation pour la fabrication de vinaigre. La soupape de retenue 50 a pour but de maintenir une légère surpression à la sortie du perméat, afin d'éviter une décarbonication du vin et préserver au mieux ses qualités organoleptiques. Pour compenser la perte de volume due à l'évacuation du perméat, on injecte en permanence dans le circuit de désalcoolisation, de l'eau déminéralisée qui est introduite dans le circuit en un point 56 et provenant d'un réservoir d'eau déminéralisée 57 après avoir traversé un tronçon de circuit 58 comportant un compteur 59, une vanne manuelle 60, un rotamètre 61 raccordé à une entrée 62 d'eau du réseau, des filtres 63, un manomètre 64 pour contrôler la pression de l'eau dans le circuit, une soupape anti-retour 65, un rotamètre électronique 66 et une vanne électromagnétique 67. L'eau déminéralisée contenue dans le réservoir 57 provient d'une source 68 et traverse un dispositif de déminéralisation 69. Les filtres 63 sont particulièrement adaptés à l'élimination du chlore qui donne un goût de moisi au vin déminéralisé et ils ont aussi pour but d'opérer une filtration stérile de l'eau déminéralisée. Les rotamètres électroniques 66 et 49 ont pour but de comparer les débits respectifs de perméat et d'eau déminéralisée et commandent la vanne 67 en fonction des résultats de cette comparaison pour assurer une compensation exacte de la perte de perméat, par introduction d'eau déminéralisée. En cas de besoin, la vanne 67 peut être commandée manuellement, par exemple pour le nettoyage ou pour effectuer une concentration du liquide traité. Un tableau d'affichage (non représenté) est prévu pour l'affichage instantané des débits et des quantités totales de perméat évacué et d'eau déminéralisée utilisée, ou pour l'affichage d'autres paramètres tels que par exemple le temps de fonctionnement du système, les relevés réguliers des manomètres, des thermomètres et des compteurs. A travers le rotamètre 61, une très faible quantité d'eau du réseau, par exemple neuf litres par heure pour un débit d'eau déminéralisée de 0,5 m3 par heure, est introduite dans le circuit afin de permettre un fonctionnement correct du rotamètre électronique 66 qui fonctionne sur base d'une mesure d'inductivité.

A titre d'exemple, l'installation utilisée, comportant un module d'osmose inverse de 19 m2 de surface de membrane a été utilisé pour traiter 683 litres de vin blanc à 11,5° d'alcool. En 5 heures de traitement le taux d'alcool a été ramené à 0,5°. La pression de désalcoolisation régnant dans le module 13 était de 32 à 33 bars. La pression d'anhydride carbonique dans la cuve de traitement se situe entre 0,8 et 0,9 bars. La température du vin en cours de désalcoolisation était de l'ordre de 10°C. Le débit horaire du perméat était de 230 litres par heure au début, de 440 litres par heure après 2 heures de fonctionnement de l'installation et de 560 litres par heure en fin de traitement. On a évacué par la vanne 51, 760 litres de perméat à 6° d'alcool et 1'400 litres de perméat à 1,8° d'alcool. Au cours de l'opération 2'200 litres d'eau de diafiltration ont été utilisées.

Comme mentionné précédemment, le vin désalcoolisé est réaromatisé à l'aide de divers ingrédients avant d'être collé, filtré et de préférence pasteurisé avant d'être livré en vrac ou en bouteilles. La comparaison des quantités totales affichées d'eau de diafiltration utilisée et de perméat évacué donne, avec le nombre connu de litres de vin contenu dans la cuve au début du traitement, le nombre de litres de vin désalcoolisé restant dans cette cuve après traitement. Cette quantité servira de base pour le calcul de la quantité d'ingrédients destinés à être introduits dans le rétentat. Ces ingrédients sont mélangés dans un ou plusieurs bacs 70 et peuvent être injectés, d'une manière qui sera décrite par la suite, dans la cuve 5 à travers la vanne 15.

Lorsque le vin a atteint le degré d'alcool voulu, on baisse la pression de désalcoolisation dans le module en agissant sur le système de régulation 29, on arrête les deux pompes 11 et 12 et on ferme la vanne 60 d'arrivée de l'eau déminéralisée. On ferme la vanne 39 pour éviter que le vin ne passe que dans le conduit 38 sans circuler dans le module 13.

Au moyen de la vanne à trois voies 4, on introduit dans le bac à ingrédients 70 dont la capacité est de l'ordre de 100 à 200 litres, la quantité de vin désalcoolisé juste nécessaire pour dissoudre une quantité prédéterminée d'ingrédients. Ce bac peut être au besoin une cuve close supportant une atmosphère de gaz non oxydant à une pression déterminée. Le mélange est ensuite aspiré par la pompe 9 et injecté à travers la vanne 15 dans le circuit normal de désalcoolisation, c'est-à-dire à travers l'osmoseur et renvoyé dans la cuve de traitement 5. L'adjonction des ingrédients peut se faire en plusieurs passages, de sorte que chaque charge d'ingrédients est envoyée avec son jus dans la cuve de traitement avant de prélever une nouvelle dose de liquide dans cette cuve 5, et de l'introduire dans le bac à ingrédients 70 pour permettre la dissolution d'une nouvelle charge d'ingrédients. Pour éviter une oxydation, on injecte de préférence une quantité déterminée d'anhydride sulfureux au moment de la dissolution des ingrédients dans le bac 70.

Pendant le processus d'introduction des ingrédients dans le circuit, seules les pompes 9 et 10 sont en service. Les pompes 11 et 12 sont arrêtées et le vin passe par le circuit 25. De cette manière, il n'y a pas suffisament de pression dans le module pour provoquer une osmose inverse et les ingrédients ne sont ni endommagés, de sorte qu'ils conservent leurs arômes, ni évacués dans le perméat.

A titre d'exemple, on a ajouté à 1'000 kg de vin désalcoolisé à 0,5°, 0,4% d'acides alimentaires, 2,8% de sucre, 3,5% de concentré de jus de fruits. Pour augmenter le goût vineux, il est possible d'ajouter environ 0,5 g par litre d'arôme naturel de vin ou de fruits ainsi qu'un maximum de 0,2% de tartrates et 0,03%o de tanin. Un brassage du vin reconstitué est effectué dans la cuve au moyen de l'agitateur 8. Le vin désalcoolisé doit ensuite être embouteillé ou filtré en circuit stérile, au plus tard dans les deux jours qui suivent sa désalcoolisation et sa reconstitution.

L'évacuation du vin collé se fait à travers la vanne 4 en direction d'un dispositif de filtration à plaques 72 vers une sortie 73 qui peut être destinée à la livraison en vrac ou une sortie 74 qui aboutit à une installation de carbonatation, de pasteurisation et de mise en bouteilles.

Pour vidanger le vin des conduites à la fin de la désalcoolisation, on introduit de l'eau de rinçage par la vanne 15 qui chasse le vin désalcoolisé contenu dans le circuit et dans le module d'osmose, ceci jusqu'à ce qu'apparaisse dans le regard de la vanne 4 de l'eau non additionnée de vin. La vanne 39 est ensuite ouverte pour permettre d'assurer la vidange finale de la conduite 38.

Quand l'eau apparaît dans le regard de la vanne 4, on déconnecte les vannes 4 et 15 et il est possible d'effectuer un nettoyage chimique séparé des conduites et du module d'osmose inverse en respectant les prescriptions du fabricant de ce module. On évacue pour cela les rinçures vers l'égoût en 41 via la vanne manuelle 37 et une seconde vanne manuelle montée sur un conduit 43 connecté sur le circuit de rinçage comprenant une cuve 44 et couramment appelée CIP (cleaning in place).

L'eau utilisée pour les opérations de nettoyage et de désinfection du module et des conduites est de l'eau du réseau fournie par une source 75 et ayant traversé un filtre à charbon actif 76. Cette eau est déchlorée à une valeur inférieure à 0,01 mg par litre de chlore libre afin d'éviter les goûts de moisi et les goûts de bouchon dans le vin.

Ce filtre est en mesure d'assurer un débit d'eau traitée de l'ordre de 5 m3 par heure.

Le vin désalcoolisé au degré voulu, additionné des ingrédients sélectionnés, est de préférence destiné à subir un traitement thermique de pasteurisation. Au préalable, il est collé avec un mélange de Bentonit-Nacalit ®, puis il est filtré clair par exemple au moyen de plaques filtrantes. On peut ensuite ajouter 1,5 à 2 g d'anhydride carbonique par litre de vin blanc et 4 à 6 g d'anhydride carbonique par litre de vin mousseux pour compenser les pertes en CO2 durant les opérations de collage. Des arômes de vin et de fruits peuvent aussi être ajoutés après le collage, indépendamment des autres ingrédients introduits préalablement. La filtration se fera de préférence avec une contre-pression si le vin contient de l'anhydride carbonique.

Le vin désalcoolisé et reconstitué peut également être pasteurisé directement dans la bouteille. A cet effet il est maintenu pendant une vingtaine de minutes à une température de 65 à 68°C pour du vin à 0,5° d'alcool résiduel. Pour des vins ayant 4° d'alcool et plus, un temps de trente minutes à une température de 50 à 55°C est suffisant. Une mise en bouteilles stérile du vin peut remplacer la pasteurisation. Toutefois, une telle opération est extrêmement coûteuse en investissement. Pour assurer un bon équilibre du vin désalcoolisé, un temps de repos de l'ordre de trois semaines à une température comprise entre 10 et 15°C doit être observée jusqu'à la consommation. Les vins ainsi traités se maintiennent sans aucun trouble bactériologique ou chimique durant au moins douze mois.

Les courbes A et B de la figure 2 illustrent respectivement le passage de l'alcool du vin dans le perméat au cours d'un traitement dont les conditions ont été décrites ci-dessus. La courbe A, dessinée en trait plein, représente le degré d'alcool contenu dans le vin en fonction du temps de traitement pour le désalcooliser. La courbe B, dessinée en traits mixtes, représente le degré d'alcool du perméat en fonction du temps de traitement pour la désalcoolisation du vin. Sur cette figure les valeurs portées en ordonnées représentent les degrés d'alcool et les valeurs portées en abscisses représentent les minutes de traitement.

Il est bien entendu que la présente invention n'est pas limitée aux formes de réalisations décrites, mais peut subir diverses modifications et se présenter sous de nombreuses variantes évidentes pour l'homme de l'art.

## Revendications

1. Procédé de désalcoolisation partielle ou totale d'un liquide alcoolisé, notamment de vin et/ou de cidre, par osmose inverse, caractérisé en ce que l'on effectue le stockage et le traitement de ce liquide à désalcooliser dans un circuit de désalcoolisation sous une atmosphère non oxydante, en ce que l'on fait passer ce liquide dans un module d'osmose inverse, en ce que l'on compense en permanence la perte de volume due à la séparation du perméat par un apport d'eau déminéralisée totalement débarrassée de toute trace de chlore, en ce que l'on rajoute au rétentat des ingrédients naturels ou synthétiques non extraits du liquide original par traitement thermique, et en ce que l'on fait subir au rétentat ainsi complété un collage et une filtration suivis d'une pasteurisation.

2. Procédé selon la revendication 1, caractérisé en ce que l'on maintient les ingrédients dans des cuves closes sous une atmosphère non oxydante.

3. Procédé selon la revendication 1, caractérisé en ce que l'on dissout une quantité prédéterminée d'ingrédients dans un volume prédéterminé de rétentat prélevé dans le circuit de désalcoolisation et en réinjectant ce mélange dans ce circuit.

4. Procédé selon la revendication 3, caractérisé en ce que l'on réinjecte les ingrédients dissous dans du rétentat après avoir abaissé la pression dans le module d'osmose inverse à une valeur inférieure à la pression minimale de déclenchement du processus d'osmose inverse.

5. Procédé selon la revendication 4, caractérisé en ce que l'on réinjecte les ingrédients dissous dans du rétentat au cours de plusieurs phases successives, chaque type d'ingrédient étant préalablement dissous dans une quantité prédéterminée de rétentat, et successivement introduit dans le rétentat.

6. Procédé selon la revendication 1, caractérisé en ce que les ingrédients sont choisis parmi les concentrés de jus de fruits, les acides alimentaires, les sucres, les tartrates et/ou le tanin.

7. Procédé selon la revendication 3, caractérisé en ce que l'on effectue la réinjection des ingrédients dissous dans du rétentat, dans le circuit de désalcoolisation en présence d'anhydride sulfureux (SO2).

8. Procédé selon la revendication 1, caractérisé en ce que l'on introduit dans le liquide désalcoolisé après le collage, une quantité prédéterminée d'anhydride carbonique (CO2).

9. Dispositif pour la mise en oeuvre d'un procédé de désalcoolisation partielle ou totale de vin et/ou du cidre par utilisation de la technique dite de l'osmose inverse, caractérisé en ce qu'il comporte un premier réservoir (5) conçu pour contenir le liquide à traiter, des moyens (6 et 7) pour créer une atmosphère non oxydante dans ledit réservoir et un circuit fermé de désalcoolisation, un module d'osmose (13) monté dans ce circuit de telle manière que le liquide circule en continu entre le réservoir (5) et le module (13), des aryens (57) pour compenser en permanence la perte de volume due à la séparation du perméat, par un apport d'eau déminéralisée, des moyens (63) pour débarrasser cette eau de toute trace de chlore, des moyens (70) pour mélanger des ingrédients naturels ou synthétiques, non extraits du liquide original, des moyens (71) pour rajouter ces ingrédients dans le rétentat, et des moyens (72) pour coller et filtrer, ainsi que des moyens (74) pour pasteuriser ledit rétentat.

10. Dispositif selon la revendication 9, caractérisé en ce qu'il comporte des moyens (4) permettant de prélever une quantité de rétentat suffisante pour dissoudre des ingrédients contenus dans une cuve à ingrédients (70) et des moyens (71, 15, 9) pour aspirer le mélange d'ingrédients dissous dans du rétentat et pour le réinjecter dans le circuit de désalcoolisation.

**Ansprüche**

1. Verfahren zur partiellen oder vollständigen Entalkoholisierung von einer alkoholhaltigen Flüssigkeit, insbesondere von Wein und/oder Apfelschaumwein, durch Umkehrosmose, **dadurch gekennzeichnet**, daß die Flüssigkeit, die entalkoholisiert werden soll, in einem Entalkoholisierungskreislauf in einer nicht oxydierenden Umgebung eingelagert und behandelt wird, daß diese Flüssigkeit ein Modul für Umkehrosmose durchläuft, daß der Verlust an Volumen, der von der Abscheidung der durchgelassenen Menge verursacht wird, durch eine Zugabe von entmineralisiertem Wasser, das von jeglicher Spur von Chlor völlig befreit ist, dauernd ausgeglichen wird, daß der Flüssigkeit, die im besagten Modul für Umkehrosmose zurückgehalten wird, natürliche oder synthetische Bestandteile zugegeben werden, die aus der ursprünglichen Flüssigkeit durch thermische Behandlung nicht extrahiert sind, und daß die somit ergänzte, zurückgehaltene Flüssigkeit einer Klärung und einer Filtrierung mit nachfolgender Pasteurisierung unterzogen wird.

2. Verfahren gemäß Anspruch 1, **dadurch gekennzeichnet**, daß die Bestandteile in geschlossenen Behältern in einer nicht oxydierenden Umgebung gehalten werden.

3. Verfahren gemäß Anspruch 1, **dadurch gekennzeichnet**, daß eine vorherbestimmte Menge von Bestandteilen in einem vorherbestimmten Volumen von zurückgehaltener Flüssigkeit, die aus dem Entalkoholisierungskreislauf entnommen wurde, aufgelöst und dieses Gemisch dem besagten Kreislauf wieder zugegeben wird.

4. Verfahren gemäß Anspruch 3, **dadurch gekennzeichnet**, daß die Bestandteile, die in der zurückgehaltenen Flüssigkeit aufgelöst sind, wieder zugegeben werden, nachdem der Druck in dem Modul für Umkehrosmose auf einen Wert herabgesetzt wurde, der kleiner als der minimale Druck für das Auslösen der Umkehrosmose ist.

5. Verfahren gemäß Anspruch 4, **dadurch gekennzeichnet**, daß die Bestandteile, die in der zurückgehaltenen Flüssigkeit aufgelöst sind, im Laufe von mehreren einanderfolgenden Phasen wieder zugegeben werden, wobei jede Art von Bestandteil in einer vorherbestimmten Menge von zurückgehaltener Flüssigkeit vorher aufgelöst und nacheinander in der zurückgehaltenen Flüssigkeit wieder zugegeben wird.

6. Verfahren gemäß Anspruch 1, **dadurch gekennzeichnet**, daß die Bestandteile unter den Konzentraten von Obstsäften, den Säuren aus Nahrungsmitteln, den Zukkern, den Tartraten und/oder der Gerbsäure ausgewählt werden.

7. Verfahren gemäß Anspruch 1, **dadurch gekennzeichnet**, daß die Bestandteile, die in der zurückgehaltenen Flüssigkeit aufgelöst sind, bei Zufuhr von Schwefeldioxyd ($SO_2$) in den Entalkoholisierungskreislauf wieder zugegeben werden.

8. Verfahren gemäß Anspruch 1, **dadurch gekennzeichnet**, daß nach der Collage der enthalkoholisierten Flüssigkeit eine vorherbestimmte Menge von Kohlensäure ($CO_2$) zugegeben wird.

9. Vorrichtung für die Anwendung eines Verfahrens zur partiellen oder vollständigen Entalkoholisierung von Wein und/oder Apfelschaumwein durch Benützung der sogenannten Technik der Umkehrosmose, **dadurch gekennzeichnet**, daß sie einen ersten Behälter (5), der ausgelegt ist, um die Flüssigkeit aufzunehmen, die zu behandeln ist, Einrichtungen (6 und 7) zur Erzeugung einer nicht oxydierenden Umgebung in dem besagten Behälter und einem Entalkoholisierungskreislauf, ein Modul für Osmose (13), das in dem besagten Kreislauf derart angeordnet ist, daß die Flüssigkeit dauernd zwischen dem Behälter (5) und dem Modul (13) fließt, Einrichtungen (57) für das stetige Ausgleichen des Verlustes an Volumen, der von der Abscheidung der durchgelassenen Menge verursacht wird, durch eine Zugabe von entmineralisiertem Wasser, Einrichtungen (63), um das entmineralisierte Wasser von jeglicher Spur von Chlor zu befreien, Einrichtungen (70) für das Vermischen von natürlichen oder synthetischen Bestandteilen, die aus der ursprünglichen Flüssigkeit nicht extrahiert sind, Einrichtungen (71) für die Zugabe dieser Bestandteile in die zurückgehaltene Flüssigkeit, Einrichtungen (72) für die Klärung und das Filtrieren und Einrichtungen (74) für die Pasteurisierung der besagten zurückgehaltenen Flüssigkeit enthält.

10. Vorrichtung gemäß Anspruch 9, **dadurch gekennzeichnet**, daß sie Einrichtungen (4) enthält, mit denen eine ausreichende Menge der zurückgehaltenen Flüssigkeit für das Auflösen von Bestandteilen, die in einem Trog für Bestandteile (70) enthalten sind, entnommen werden kann, und Einrichtungen (71, 15, 9) für das Absaugen des Gemisches von Bestandteilen, die in der zurückgehaltenen Flüssigkeit aufgelöst sind, und dieses Gemisch in den Entalkoholisierungskreislauf wieder zuzugeben.

## Claims

1. A process to dealcoholize partially or totally an alcoholic liquid, in particular wine and/or cider, by reverse osmosis, characterized in that the liquid to be dealcoholized is stored and processed in a dealcoholizing circuit in a non-oxidizing atmosphere, in that said liquid is passed through a module of reverse osmosis, in that the loss of volume due to the separation of the permeate is continually made up for with an injection or demineralized water totally free of any trace of chlorine, in that natural or artificial ingredients not removed from the original liquid by a heat treatment are added to the retentate, and in that the retentate thus completed is clarified, then pasteurized.

2. A process according to claim 1, characterized in that the ingredients are kept in closed vats in a non-oxidizing atmosphere.

3. A process according to claim 1, characterized in that a predetermined amount of ingredients are dissolved in a predetermined volume of retentate taken from the dealcoholizing circuit, and in reinjecting this mixture into said circuit.

4. A process according to claim 3, characterized in that the ingredients dissolved in said retentate are reinjected after the pressure in the module of reverse osmosis has been lowered to a value below the minimum pressure required to start the process of reverse osmosis.

5. A process according to claim 4, characterized in that the ingredient dissolved in said retentate are reinjected during several successive phases, each type of ingredient being dissolved beforehand in a predetermined amount of retentate, and successively introduced into the retentate.

6. A process according to claim 1, characterized in that ingredients are choosed between fruit juice concentrates, foods acids, sugars, tartrates, and/or tannin.

7. A process according to claim 3, characterized in that the ingredients dissolved in said retentate are reinjected into the dealcoholizing circuit in the presence of sulfur dioxyde ($SO_2$).

8. A process according to claim 1, characterized in that a predetermined amount of carbon dioxyde ($CO_2$) is introduced into the deacoholized liquid after clarification.

9. Apparatus to carry out a process of partial or total dealcoholization of wine and/or cider by using the so-called technique of reverse osmosis, characterized in that it comprises a first tank (5) designed to contain liquid to be processed, means (6 and 7) to create a non-oxidizing atmosphere in said tank and in a closed dealcoholizing circuit, a module of osmosis (13) mounted in said circuit in such manner that said liquid circulates continuously between said tank (5) and said module (13), means (57) to continuously make up for the loss of volume due to the separation of permeate, through an injection of demineralized water, means (63) to remove from said water any trace of chlorine, means (70) to mix natural or artificial ingredients, not removed from the original liquid, means (71) to add these ingredients into the retentate, and means (72) to clarify and to filter, as also means (74) to pasteurize said retentate.

10. Apparatus according to claim 9, including means (4) to take an amount of retentate sufficient to dissolve ingredients contained in an ingredient container (70) and means (71, 15, 9) to suck up the mixture of ingredients dissolved in said retentate and reinjected it into said dealcoholizing circuit.

FIG. 1

FIG. 2